# EUROPEAN PATENT APPLICATION

(11) **EP 2 897 311 A1**
(43) Date of publication of application: **22.07.2015**
(21) Application number: 14151802.7
(22) Date of filing: 20.01.2014
(51) Int. Cl.: H04B 10/25

(54) **Optical Communication Signal Conversion**

(71) Applicant: Telefonaktiebolaget L M Ericsson (publ), 164 83 Stockholm (SE)
(72) Inventor: Contestabile, Giampiero, 56100 Pisa (IT); Giorgi, Luca, 56100 Pisa (IT); Bottari, Giulio, 56100 Pisa (IT)
(74) Representative: Parkinson, Neil Scott

(57) **Abstract**

An optical communication signal converter (10) comprising:
an input (12) arranged to receive an input optical communication signal (14), having a first wavelength and a first optical power, carrying communications traffic encoded as an intensity modulation;
a non-linear optical medium (18) having a gain spectrum comprising the first wavelength and having a saturation power, and arranged to receive the input signal (14), the first optical power being higher than the saturation power, and arranged to receive a carrier optical signal (20) having a second wavelength, longer than the first wavelength and outside the gain spectrum, , wherein when the carrier optical signal and the input optical communication signal co-propagate in the non-linear optical medium cross-phase modulation of the carrier signal (20) by the input signal causes the input signal intensity modulation to be converted into a phase modulation of the carrier signal, forming an output phase modulated optical communication signal (22) carrying said communications traffic; and
an optical output (24).

## Description

### Technical Field

The invention relates to an optical communication signal converter. The invention further relates to an optical communication signal aggregator comprising the optical communication signal converter. The invention further relates to an optical communication network comprising the optical communication signal converter. The invention further relates to a method of wavelength and line code conversion of an optical communication signal.

### Background

In current mobile telecommunication networks, connecting a multitude of base stations, BS, and radio equipment, RE, to an optical backhaul segment, based on dense wavelength division multiplexing, DWDM, rings requires a coloured interface between each RE and its base station. Such interfaces can have a fixed or tuneable transmission wavelength. The use of fixed coloured interfaces implies that the transmission wavelength is statically assigned at the installation phase with additionally inventory and storage costs. Tuneable coloured interfaces, on the contrary, can change the transmission wavelength and are more flexible even if more expensive.

A less expensive option is to use grey optical interfaces and to convert the signal at an aggregation node located on the DWDM ring. An aggregation node, in this context, comprises a number of grey optical receivers which receive grey optical channels and convert them into electrical signals (optical-electrical conversion) and a number of "coloured" transmitters which reconvert the electrical signals into optical signals at a wavelength in the DWDM comb (electrical-optical conversion), for example in the C-band.

Backhaul optical networks are nowadays largely deployed for connecting data users and mobile antennas to the mobile core network. The evolutionary trend is towards adaptation and aggregation of multi-generation traffic for packet transport over a digital backhaul infrastructure. Client traffic, coming from the BS/RE nodes, is wrapped in a coloured lightpath in one of two possible ways, as follows. At the BS/RE using a coloured transceiver installed at the BS/RE site (for example using a DWDM SFP provided in the BS/RE site router). Or at a node located on the DWDM ring, for example a fixed optical add-drop multiplexer, OADM. In this second arrangement, a grey transceiver is installed at the BS/RE site and the client traffic is transmitted on a grey optical channel in the O-band (1260-1360 nm) to the node on the DWDM ring. At the node, the grey channel is terminated and converted into a coloured lightpath, at a wavelength in the DWDM comb.

The use of grey optical interfaces simplifies the inventory required to construct the fronthaul network because all the connected BS/RE can use the same components with no need to manage colour assignment at the client level. However, the grey channels must be electrically converted to coloured channels to fit the DWDM comb in the DWDM ring. Electrical processing increases the complexity, power consumption and footprint of the system and should be avoided whenever possible. In addition, electronic processing increases the transmission delay and it is not optically transparent. A solution to this is all optical wavelength conversion, as reported by J.P.R. Lacey et al, "All-optical 1300-nm to 1550-nm wavelength conversion using cross-phase modulation in a semiconductor optical amplifier", IEEE Photon. Technol. Lett., vol. 8, pages 885-887, 1996.

### Summary

It is an object to provide an improved optical communication signal converter. It is a further object to provide an improved optical communication signal aggregator. It is a further object to provide an improved optical communication network. It is a further object to provide an improved method of wavelength and line code conversion of an optical communication signal.

A first aspect of the invention provides an optical communication signal converter comprising an optical input, a non-linear optical medium and an optical output. The optical input is arranged to receive an input optical communication signal. The input optical communication signal has a first wavelength and a first optical power, and the input optical communication signal carries communications traffic encoded as an intensity modulation. The non-linear optical medium has a gain spectrum comprising the first wavelength and has a saturation optical power. The non-linear optical medium is arranged to receive the input optical communication signal, the first optical power being higher than the saturation optical power. The non-linear optical medium is arranged to receive a carrier optical signal having a second wavelength, longer than the first wavelength and outside the gain spectrum of the non-linear optical medium. When the carrier optical signal and the input optical communication signal co-propagate in the non-linear optical medium cross-phase modulation of the carrier optical signal by the input optical communication signal occurs within the non-linear optical medium. This causes the intensity modulation of the input optical communication signal to be converted into a phase modulation of the carrier optical signal, thereby forming an output phase modulated optical communication signal carrying said communications traffic. The optical output is arranged to output the output optical communication signal.

Using a non-linear optical medium having a gain spectrum which comprises the first wavelength but not the second wavelength, so that the input optical signal is in the gain spectrum of the non-linear optical medium and the carrier optical signal is outside the gain spectrum, may enable all optical wavelength and modulation format conversion of optical communication signals using only cross-phase modulation. That is to say cross-gain modulation, and the amplitude modulation of the output optical signal which can accompany it, may be avoided. The optical communication signal converter may enable wavelength and modulation format conversion of optical communication signals without any electro-optical conversion, which may reduce system complexity, power consumption and footprint, and may reduce transmission delay. The optical communication signal converter may operate across a broad optical bandwidth. The optical communication signal converter may enable all optical wavelength conversion of grey optical signals to an assigned wavelength within an optical communication network, for example in the dense wavelength division multiplexing, DWDM, wavelength comb.

In an embodiment, the non-linear optical medium is a semiconductor gain medium having a gain spectrum comprising a plurality of wavelengths. The first wavelength is within the gain spectrum and the second wavelength is outside the gain spectrum. Use of a semiconductor gain medium may enable the optical communication signal converter to operate across a broad optical bandwidth.

In an embodiment, the optical communication signal converter comprises a semiconductor optical amplifier comprising the semiconductor gain medium. Use of a semiconductor optical amplifier, SOA, may enable the optical communication signal converter to operate across a broad optical bandwidth, for example to convert an input optical signal having a first wavelength in the O-band may be converted into an output optical signal having a second wavelength in the C- or L-band.

In an embodiment, the intensity modulation is a non-return-to-zero intensity modulation and the phase modulation is a differential phase-shift keying coded version of the intensity modulation. A non-return-to-zero, NRZ, intensity modulated input optical signal may ensure that the first optical power of the input optical communication signal is maintained above the saturation optical power of the non-linear optical medium, so that cross-phase modulation continues to occur.

In an embodiment, the intensity modulation is a digital intensity modulation.

In an embodiment, the output phase modulated optical communication signal is a differential phase-shift keying, DPSK, version of the input optical communication signal.

In an embodiment, the optical communication signal converter is arranged to convert an input optical communication signal carrying communications traffic having a bit rate in the range 1.2Gbit/s to 10Gbit/s. The optical communication signal converter may support traffic at a range of bit rates.

In an embodiment, the optical communication signal converter comprises an optical source arrange to generate the carrier optical signal. In an embodiment, the optical source is wavelength tuneable. This may enable the carrier signal wavelength to be selected during installation and may enable dynamic tuning of the wavelength during operation, which may for example be effected under control of a network management system.

In an embodiment, the optical communication signal converter comprises an optical input arranged to receive the optical carrier signal. This may enable the optical communication signal converter to operate using remotely generated carrier signals, which may enable greater control of the wavelength of the carrier optical signal.

In an embodiment, the optical communication signal converter further comprises an optical preamplifier arranged to receive the input optical signal and arranged to amplify the optical signal from the first optical power to a second optical power, higher than the saturation optical power of the non-linear optical medium. This may enable the optical signal converter to be used with input optical signals having a low optical power.

In an embodiment, the optical preamplifier comprises a semiconductor optical amplifier.

In an embodiment, each semiconductor optical amplifier is a polarisation independent semiconductor optical amplifier. This may enable the optical communication signal converter to operate on an input optical signal of any polarisation and may enable it to operate on input optical communication signals having low optical power.

In an embodiment, the optical communication signal converter is a photonic integrated device. This may enable lower latency to be achieved than is possible with bulk-optic or opaque equivalent systems.

A second aspect of the invention provides an optical communication signal aggregator comprising a plurality of optical communication signal converters and a wavelength multiplexer. Each optical communication signal converter comprises an optical input, a non-linear optical medium and an optical output. Each optical input is arranged to receive a respective input optical communication signal. Each input optical communication signal has a first wavelength and a first optical power, and each input optical communication signal carries respective communications traffic encoded as an intensity modulation. Each non-linear optical medium is arranged to receive a respective carrier optical signal at a different one of a plurality of wavelengths. Each non-linear optical medium has a saturation optical power and has a gain spectrum comprising the respective first wavelength and excluding the respective second wavelength. Each non-linear optical medium is arranged to receive the respective input optical communication signal, the first optical power of each input optical communication signal being higher than the saturation optical power of the respective non-linear optical medium. When each carrier optical signal and input optical communication signal pair co-propagate in the respective non-linear optical medium cross-phase modulation of the carrier optical signal by the input optical communication signal occurs within said non-linear optical medium. This causes the intensity modulation of each input optical communication signal to be converted into a phase modulation of the respective carrier optical signal, thereby forming a respective output phase modulated optical communication signal carrying the respective communications traffic. Each optical output is arranged to output the respective output optical communication signal. The wavelength multiplexer is arranged to receive each respective output optical communication signal. The wavelength multiplexer has an output arranged to be connected to an optical communication network and is configured to add the output optical communication signals to the optical communication network.

Using a plurality of non-linear optical media each having a gain spectrum comprising the respective first wavelength and excluding the respective second wavelength may enable all optical wavelength and modulation format conversion of a plurality of input optical communication signals using only cross-phase modulation. That is to say cross-gain modulation, and the amplitude modulation of the output optical signal which can accompany it, may be avoided. The optical communication signal aggregator may enable all optical wavelength and modulation format conversion of multiple optical communication signals. The optical communication signal aggregator may therefore enable wavelength and modulation format conversion of optical communication signals without any electro-optical conversion, which may reduce system complexity, power consumption and footprint, and may reduce transmission delay. The optical communication signal aggregator may operate across a broad optical bandwidth. The optical communication signal aggregator may enable all optical wavelength conversion of a plurality of grey optical signals to respective assigned wavelengths within an optical communication network, for example in the dense wavelength division multiplexing, DWDM, wavelength comb. It may therefore be used to aggregate multiple grey channels from different clients into a single DWDM comb to be transmitted over a single output fibre.

In an embodiment, the optical communication network is configured to transmit optical signals at a plurality of wavelengths within a preselected wavelength range. Each second wavelength is one of the plurality of wavelengths and each first wavelength is outside the preselected wavelength range. The optical communication signal aggregator may aggregate multiple grey channels, at wavelengths outside a DWDM comb, from different clients into a single DWDM comb for transmission across an optical network.

In an embodiment, each optical communication signal converter further comprises an optical source arranged to generate the respective carrier optical signal at the respective second wavelength.

In an embodiment, the optical communication signal aggregator further comprises a wavelength demultiplexer having an input arranged to receive carrier optical signals at the second wavelengths, and the wavelength demultiplexer being connected to the optical signal converters and arranged to direct a respective one of said carrier optical signals to the respective optical amplifier. This may enable the optical communication signal aggregator to operate using remotely generated carrier signals, which may enable greater control of the wavelengths of the carrier optical signals.

In an embodiment, the wavelength demultiplexer comprises a wavelength tuneable optical filter. This may enable the wavelength of each carrier signal to be selected during installation and may enable dynamic tuning of one or more of the carrier signal wavelengths during operation, which may for example be effected under control of a network management system.

In an embodiment, the wavelength multiplexer comprises one of an optical signal combiner and an arrayed waveguide grating.

In an embodiment, each non-linear optical medium is a semiconductor gain medium having a gain spectrum comprising a plurality of wavelengths. Each first wavelength is within the respective gain spectrum and each second wavelength is outside the respective gain spectrum. Use of a semiconductor gain medium may enable the optical communication signal converter to operate across a broad optical bandwidth.

In an embodiment, each optical communication signal converter comprises a semiconductor optical amplifier comprising the semiconductor gain medium. Use of a semiconductor optical amplifier, SOA, may enable each optical communication signal converter, and thus the aggregator, to operate across a broad optical bandwidth. For example, the aggregator may convert input optical signals each having a first wavelength in the O-band into respective output optical signals each having a second wavelength in the Cor L-band.

In an embodiment, the intensity modulation is a non-return-to-zero intensity modulation and the phase modulation is a differential phase-shift keying coded version of the intensity modulation. A non-return-to-zero, NRZ, intensity modulated input optical signal may ensure that the first optical power of the input optical communication signal is maintained above the saturation optical power of the non-linear optical medium, so that cross-phase modulation continues to occur.

In an embodiment, the intensity modulation is a digital intensity modulation.

In an embodiment, the output phase modulated optical communication signal is a differential phase-shift keying, DPSK, version of the input optical communication signal.

In an embodiment, each optical communication signal converter is arranged to convert an input optical communication signal carrying communications traffic having a bit rate in the range 1.2Gbit/s to 10Gbit/s. The optical communication signal aggregator may therefore support input optical communication signals at multiple bit rates.

In an embodiment, each optical communication signal converter comprises an optical source arrange to generate the carrier optical signal.

In an embodiment, each optical source is wavelength tuneable. This may enable each carrier signal wavelength to be selected during installation and may enable dynamic tuning of the wavelength during operation, which may for example be effected under control of a network management system.

In an embodiment, each optical communication signal converter further comprises an optical preamplifier arranged to receive the respective input optical signal and arranged to amplify said optical signal from the respective first optical power to a respective second optical power, higher than the saturation optical power of the respective non-linear optical medium. This may enable the optical signal converter to be used with input optical signals having a low optical power.

In an embodiment, each optical preamplifier comprises a semiconductor optical amplifier.

In an embodiment, each semiconductor optical amplifier is a polarisation independent semiconductor optical amplifier. This may enable each optical communication signal converter to operate on an input optical signal of any polarisation and may enable it to operate on input optical communication signals having low optical power.

In an embodiment, each optical communication signal converter is a photonic integrated device. This may enable lower latency to be achieved than is possible with bulk-optic or opaque equivalent systems.

A third aspect of the invention provides a communication network comprising an optical communication signal converter, a radio network unit and an optical communication network. The optical communication signal converter comprising an optical input, a non-linear optical medium and an optical output. The optical input is arranged to receive an input optical communication signal. The input optical communication signal has a first wavelength and a first optical power, and the input optical communication signal carries communications traffic encoded as an intensity modulation. The non-linear optical medium has a gain spectrum comprising the first wavelength and has a saturation optical power. The non-linear optical medium is arranged to receive the input optical communication signal, the first optical power being higher than the saturation optical power. The non-linear optical medium is arranged to receive a carrier optical signal having a second wavelength, longer than the first wavelength and outside the gain spectrum of the non-linear optical medium. When carrier optical signal and the input optical communication signal co-propagate in the non-linear optical medium cross-phase modulation of the carrier optical signal by the input optical communication signal occurs within the non-linear optical medium. This causes the intensity modulation of the input optical communication signal to be converted into a phase modulation of the carrier optical signal, thereby forming an output phase modulated optical communication signal carrying said communications traffic. The optical output is arranged to output the output optical communication signal. The radio network unit is coupled to the optical communication signal converter via an optical link. The radio network unit is arranged to generate and transmit an optical communication signal having a first wavelength and an optical power, and said optical communication signal carrying communications traffic encoded as an intensity modulation. The output of the optical communication signal converter is coupled to the optical communication network, to enable the output optical communication signal to be added to the optical communication network.

Using a non-linear optical medium having a gain spectrum which comprises the first wavelength but not the second wavelength, so that the input optical signal is in the gain spectrum of the non-linear optical medium and the carrier optical signal is outside the gain spectrum, may enable all optical wavelength and modulation format conversion of optical communication signals using only cross-phase modulation. That is to say cross-gain modulation, and the amplitude modulation of the output optical signal which can accompany it, may be avoided. The optical communication network may enable all optical wavelength and modulation format conversion of optical communication signals being transmitted between the radio network unit and the optical communication network. The optical communication network may therefore enable wavelength and modulation format conversion of optical communication signals without any electro-optical conversion, which may reduce system complexity, power consumption and footprint, and may reduce transmission delay. The optical communication signal converter may operate across a broad optical bandwidth. The optical communication signal converter may enable all optical wavelength conversion of grey optical signals to an assigned wavelength within the optical communication network, for example in the dense wavelength division multiplexing, DWDM, wavelength comb.

In an embodiment, the non-linear optical medium is a semiconductor gain medium having a gain spectrum comprising a plurality of wavelengths. The first wavelength is within the gain spectrum and the second wavelength is outside the gain spectrum. Use of a semiconductor gain medium may enable the optical communication signal converter to operate across a broad optical bandwidth.

In an embodiment, the optical communication signal converter comprises a semiconductor optical amplifier comprising the semiconductor gain medium. Use of a semiconductor optical amplifier, SOA, may enable the optical communication signal converter to operate across a broad optical bandwidth, for example to convert an input optical signal having a first wavelength in the O-band may be converted into an output optical signal having a second wavelength in the C- or L-band.

In an embodiment, the intensity modulation is a non-return-to-zero intensity modulation and the phase modulation is a differential phase-shift keying coded version of the intensity modulation. A non-return-to-zero, NRZ, intensity modulated input optical signal may ensure that the first optical power of the input optical communication signal is maintained above the saturation optical power of the non-linear optical medium, so that cross-phase modulation continues to occur.

In an embodiment, the intensity modulation is a digital intensity modulation.

In an embodiment, the output phase modulated optical communication signal is a differential phase-shift keying, DPSK, version of the input optical communication signal.

In an embodiment, the optical communication signal converter is arranged to convert an input optical communication signal carrying communications traffic having a bit rate in the range 1.2Gbit/s to 10Gbit/s. The optical communication signal converter, and thus the network, may support traffic at a range of bit rates.

In an embodiment, the optical communication signal converter comprises an optical source arrange to generate the carrier optical signal. In an embodiment, the optical source is wavelength tuneable. This may enable the carrier signal wavelength to be selected during installation and may enable dynamic tuning of the wavelength during operation, which may for example be effected under control of a network management system.

In an embodiment, the optical communication signal converter comprises an optical input arranged to receive the optical carrier signal from the optical communication network. This may enable the optical communication signal converter to operate using remotely generated carrier signals, which may enable greater control of the wavelength of the carrier optical signal.

In an embodiment, the optical communication signal converter further comprises an optical preamplifier arranged to receive the input optical signal and arranged to amplify the optical signal from the first optical power to a second optical power, higher than the saturation optical power of the non-linear optical medium. This may enable the optical signal converter to be used with input optical communication signals having a low optical power.

In an embodiment, the optical preamplifier comprises a semiconductor optical amplifier.

In an embodiment, each semiconductor optical amplifier is a polarisation independent semiconductor optical amplifier. This may enable the optical communication signal converter to operate on an input optical signal of any polarisation and may enable it to operate on input optical communication signals having low optical power.

In an embodiment, the optical communication signal converter is a photonic integrated device. This may enable lower latency to be achieved than is possible with bulk-optic or opaque equivalent systems.

In an embodiment, the optical communication signal converter is provided within an optical communication signal aggregator. The optical communication signal aggregator comprises a plurality of optical communication signal converters and a wavelength multiplexer. Each optical communication signal converter comprises an optical input, a non-linear optical medium and an optical output. Each optical input is arranged to receive a respective input optical communication signal. Each input optical communication signal has a first wavelength and a first optical power, and each input optical communication signal carries respective communications traffic encoded as an intensity modulation. Each non-linear optical medium is arranged to receive a respective carrier optical signal at a different one of a plurality of wavelengths. Each non-linear optical medium has a respective saturation optical power and has a respective gain spectrum comprising the respective first wavelength and excluding the respective second wavelength. Each non-linear optical medium is arranged to receive the respective input optical communication signal, the first optical power of each input optical communication signal being higher than the saturation optical power of the respective non-linear optical medium. When each carrier optical signal and input optical communication signal pair co-propagate in the respective non-linear optical medium cross-phase modulation of the carrier optical signal by the input optical communication signal occurs within said non-linear optical medium. This causes the intensity modulation of each input optical communication signal to be converted into a phase modulation of the respective carrier optical signal, thereby forming a respective output phase modulated optical communication signal carrying the respective communications traffic. Each optical output is arranged to output the respective output optical communication signal. The wavelength multiplexer is arranged to receive each respective output optical communication signal. The wavelength multiplexer has an output connected to the optical communication network and is configured to add the output optical communication signals to the optical communication network.

The optical communication signal aggregator may enable all optical wavelength and modulation format conversion of multiple optical communication signals. The optical communication signal aggregator may operate across a broad optical bandwidth. The optical communication signal aggregator may enable all optical wavelength conversion of a plurality of grey optical signals to respective assigned wavelengths within an optical communication network, for example in the dense wavelength division multiplexing, DWDM, wavelength comb. It may therefore be used to aggregate multiple grey channels from different clients into a single DWDM comb to be transmitted over the optical communication network.

In an embodiment, the optical communication network is configured to transmit optical signals at a plurality of wavelengths within a preselected wavelength range. Each second wavelength is one of the plurality of wavelengths and each first wavelength is outside the preselected wavelength range. The optical communication signal aggregator may aggregate multiple grey channels, at wavelengths outside a DWDM comb, from different clients into a single DWDM comb for transmission across the optical communication network.

In an embodiment, each optical communication signal converter further comprises an optical source arranged to generate the respective carrier optical signal at the respective second wavelength.

In an embodiment, the optical communication signal aggregator further comprises a wavelength demultiplexer having an input arranged to receive carrier optical signals from the optical communication network at the second wavelengths, and the wavelength demultiplexer being connected to the optical signal converters and arranged to direct a respective one of said carrier optical signals to the respective optical amplifier. This may enable the optical communication signal aggregator to operate using remotely generated carrier signals, which may enable greater control of the wavelengths of the carrier optical signals.

In an embodiment, the wavelength demultiplexer comprises a wavelength tuneable optical filter. This may enable the wavelength of each carrier signal to be selected during installation and may enable dynamic tuning of one or more of the carrier signal wavelengths during operation, which may for example be effected under control of a network management system.

In an embodiment, the wavelength multiplexer comprises one of an optical signal combiner and an arrayed waveguide grating.

In an embodiment, the optical communication network comprises a plurality of optical sources each arranged to generate and transmit a respective one of the optical carrier signals, each optical source being located remote from the optical signal aggregator.

A fourth aspect of the invention provides a method of wavelength and line code conversion of an optical communication signal. The method comprises receiving an input optical communication signal having a first wavelength and a first optical power, and carrying communications traffic encoded as an intensity modulation. The method comprises providing a carrier optical signal, having a second wavelength, longer than the first wavelength. The method comprises co-propagating the input optical communication signal and the carrier optical signal through a non-linear optical medium having a saturation optical power and having a gain spectrum comprising the first wavelength and excluding the second wavelength, the input optical communication signal having the first optical power higher than the saturation optical power such that cross-phase modulation of the carrier optical signal by the input optical communication signal occurs within the non-linear optical medium. This causes the intensity modulation of the input optical communication signal to be converted into a phase modulation of the carrier optical signal, thereby forming an output phase modulated optical communication signal carrying said communications traffic.

Using a non-linear optical medium having a gain spectrum which comprises the first wavelength but not the second wavelength, so that the input optical signal is in the gain spectrum of the non-linear optical medium and the carrier optical signal is outside the gain spectrum, may enable all optical wavelength and modulation format conversion of optical communication signals using only cross-phase modulation. That is to say cross-gain modulation, and the amplitude modulation of the output optical signal which can accompany it, may be avoided. The method may enable all optical wavelength and modulation format conversion of optical communication signals. The method may therefore enable wavelength and modulation format conversion of optical communication signals without any electro-optical conversion, which may reduce complexity and may reduce transmission delay. The method may be used across a broad optical bandwidth. The method may enable all optical wavelength conversion of grey optical signals to an assigned wavelength within an optical communication network, for example in the dense wavelength division multiplexing, DWDM, wavelength comb.

In an embodiment, the non-linear optical medium is a semiconductor gain medium having a gain spectrum comprising a plurality of wavelengths. The first wavelength is within the gain spectrum and the second wavelength is outside the gain spectrum. Use of a semiconductor gain medium may enable the method to be used across a broad optical bandwidth.

In an embodiment, the intensity modulation is a non-return-to-zero intensity modulation and the phase modulation is a differential phase-shift keying coded version of the intensity modulation. A non-return-to-zero, NRZ, intensity modulated input optical signal may ensure that the first optical power of the input optical communication signal is maintained above the saturation optical power of the non-linear optical medium, so that cross-phase modulation continues to occur.

In an embodiment, the intensity modulation is a digital intensity modulation.

In an embodiment, the output phase modulated optical communication signal is a differential phase-shift keying, DPSK, version of the input optical communication signal.

In an embodiment, the input optical communication signal carrying communications traffic has a bit rate in the range 1.2Gbit/s to 10Gbit/s. The method may be used with an input optical communication signal carrying traffic at a range of bit rates.

In an embodiment, the method comprises locally generating the carrier optical signal.

In an embodiment, the method comprises receiving a remotely generated carrier signal, which may enable greater control of the wavelength of the carrier optical signal.

In an embodiment, the method comprises amplifying the optical signal from the first optical power to a second optical power, higher than the saturation optical power of the non-linear gain medium, before co-propagating the input optical communication signal and the carrier optical signal through the pumped non-linear optical medium. This may enable the method to be used with input optical signals having a low optical power.

A fifth aspect of the invention provides a data carrier having computer readable instructions embodied therein. The said computer readable instructions are for providing access to resources available on a processor. The computer readable instructions comprise instructions to cause the processor to perform any of the above steps of the method of wavelength and line code conversion of an optical communication signal.

In an embodiment, the data carrier is a non-transitory data carrier.

Embodiments of the invention will now be described, by way of example only, with reference to the accompanying drawings.

### Brief Description of the drawings

Figure 1 is a schematic representation of an optical communication signal converter according to a first embodiment of the invention;
Figure 2 is a schematic representation of an optical communication signal converter according to a second embodiment of the invention;
Figure 3 is a schematic representation of an optical communication signal converter according to a third embodiment of the invention;
Figure 4 shows (a) the output optical signal from the XPM SOA, SOA2, (b) shows phase demodulated signal after detuned DI;
Figure 5 is a schematic representation of an optical communication signal converter according to a fourth embodiment of the invention;
Figure 6 is a schematic representation of an experimental set-up used for a proof of concept demonstration of an optical communication signal converter according to a fifth embodiment of the invention; inset (a) shows the optical spectrum output from SOA2 and inset (b) shows the optical spectrum after the WDM splitter;
Figure 7 shows eye diagrams of the input optical communication signal (from the XFL Tx at 1306nm) and the corresponding demodulated converted output optical communications signals (at 1537nm) for bit rates of 1.244 Gb/s, 2,488 Gb/s, 4.976 Gb/s and 9.952 Gb/s;
Figure 8 shows bit error rate (BER) measurements for each of the input and converted output signals of Figure 7;
Figure 9 is a schematic representation of an optical communication signal aggregator according to a sixth embodiment of the invention;
Figure 10 is a schematic representation of an optical communication signal aggregator according to a seventh embodiment of the invention;
Figure 11 is a schematic representation of an optical communication signal aggregator according to an eighth embodiment of the invention;
Figure 12 is a schematic representation of a communication network according to a ninth embodiment of the invention;
Figure 13 is a schematic representation of part of a communication network according to a tenth embodiment of the invention;
Figure 14 is a schematic representation of part of a communication network according to an eleventh embodiment of the invention;
Figure 15 shows the steps of a method according to a twelfth embodiment of the invention of wavelength and line code conversion of an optical communication signal;
Figure 16 shows the steps of a method according to a thirteenth embodiment of the invention of wavelength and line code conversion of an optical communication signal;
Figure 17 shows the steps of a method according to a fourteenth embodiment of the invention of wavelength and line code conversion of an optical communication signal; and
Figure 18 shows the steps of a method according to a fifteenth embodiment of the invention of wavelength and line code conversion of an optical communication signal.

### Detailed description

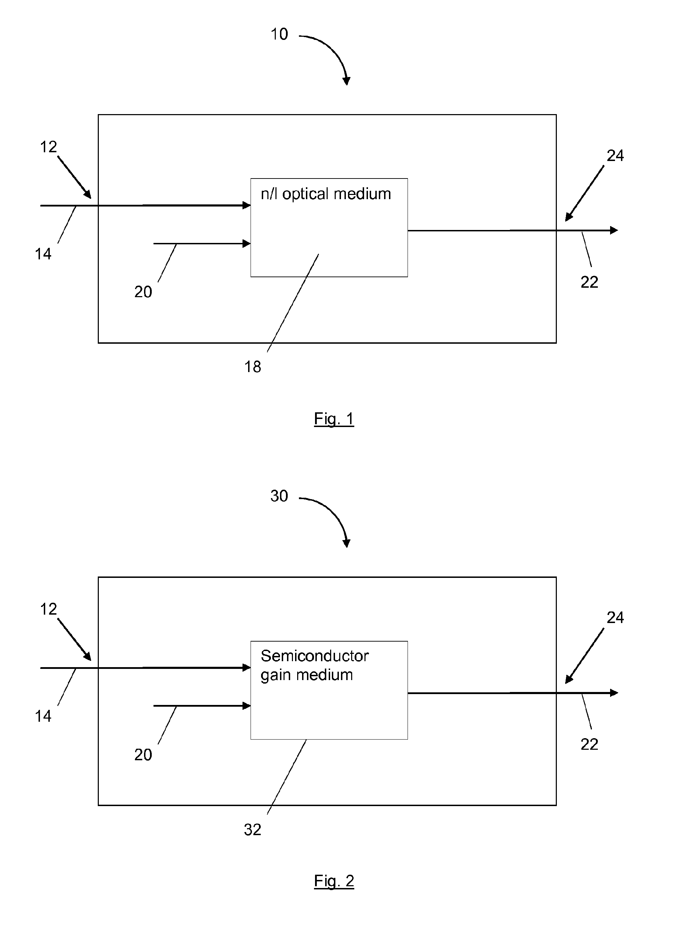

Referring to Figure 1, a first embodiment of the invention provides an optical communication signal converter 10 comprising an optical input 12, a non-linear optical medium 18, and an optical output 24.

The optical input 12 is arranged to receive an input optical communication signal 14 which has a first wavelength and a first optical power. The input optical communication signal 14 carries communications traffic encoded as an intensity modulation.

The non-linear optical medium 18 has a gain spectrum, being a range of wavelengths at which the non-linear optical medium can apply gain to an optical signal propagating through it, which comprises the first wavelength and has a saturation optical power. It will be appreciated that gain means a positive gain, i.e. a gain of at least 1. The non-linear optical medium is arranged to receive the input optical communication signal, the first optical power being higher than the saturation optical power. The non-linear optical medium is arranged also to receive a carrier optical signal 20, which has a second wavelength, longer than the first wavelength and outside the gain spectrum of the non-linear optical medium.

When the carrier optical signal and the input optical communication signal co-propagate in the non-linear optical medium, cross-phase modulation, XPM, of the carrier optical signal by the input optical communication signal occurs within the non-linear optical medium. Because the carrier optical signal is outside the gain spectrum of the non-linear optical medium, only XPM occurs between the input optical communication signal and the carrier optical signal, without any cross-gain modulation, XGM. This causes the intensity modulation of the input optical communication signal to be converted into a phase modulation of the carrier optical signal, thereby forming an output phase modulated optical communication signal 22 carrying the communications traffic, without any unwanted amplitude modulation on the output optical communication signal.

The optical output 24 is arranged to output the output optical communication signal.

Figure 2 shows an optical communication signal converter 30 according to a second embodiment of the invention. The optical communication signal converter 30 of this embodiment is similar to the optical communication signal converter 10 of Figure 1, with the following modifications. The same reference numbers are retained for corresponding features.

In this embodiment, the non-linear optical medium is a semiconductor gain medium 32. The semiconductor gain medium has a gain spectrum comprising a plurality of wavelengths. The first wavelength is within the gain spectrum and the second wavelength is outside the gain spectrum.

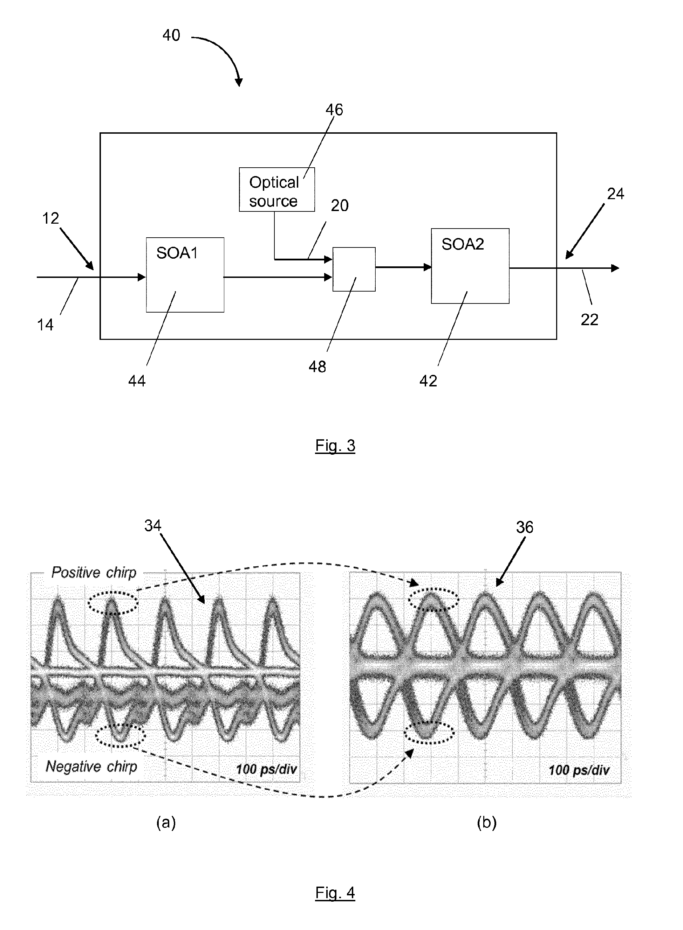

Figure 3 shows an optical communication signal converter 40 according to a third embodiment of the invention. The optical communication signal converter 40 of this embodiment is similar to the optical communication signal converter 30 of Figure 2, with the following modifications.

In this embodiment, the semiconductor gain medium is provided within a semiconductor optical amplifier 42, SOA. The optical communication signal converter 40 further comprises an optical preamplifier, which here takes the form of a second SOA 44, and an optical source 46. Both the SOAs in this example have a gain spectrum which extends around 1300nm. The optical source 46 is arranged to generate the carrier optical signal 20.

The preamplifier SOA 44 is arranged to receive the input optical signal 14 and amplify the input optical signal from the first optical power to a second optical power, higher than the saturation optical power of the XPM SOA 42.

The input optical communication signal 14 has a first wavelength within the O-band (1260nm-1360nm), in this case 1306nm, and the carrier optical signal 20 has a second wavelength within the C-band (1530nm-1565nm), in this case 1553nm. The input optical communication signal carries communications traffic encoded as a non-return-to-zero, NRZ, intensity modulation. The XPM which occurs during co-propagation of the input optical communication signal and the carrier optical signal through the SOA causes the NRZ intensity modulation to be encoded into a differential phase-shift keying, DPSK, phase modulated output signal.

When the NRZ input optical communication signal saturates the SOA intensity overshoots occur with positive and negative chirp corresponding to the input optical signal power transitions, as can be seen in the output phase modulated optical communication signal 22 shown in Figure 4(a). These overshoots are experienced as pure phase modulations by the carrier optical signal that is outside the gain region of the SOA. In this way each logical input data transition, that is each transition of the NRZ input signal, gives rise to a pure phase pulse on the carrier optical signal in the C-band, i.e., the input intensity modulation is encoded as an output DPSK phase modulated optical communication signal.

The output DPSK signal can be received using a conventional 1-bit delay line interferometers (Dls) together with balanced or conventional detectors, or, more conveniently from cost and complexity point of view, a single DI. A phase demodulated version of the output phase modulated optical communication signal, after receipt at a detuned DI, is shown in Figure 4(b).

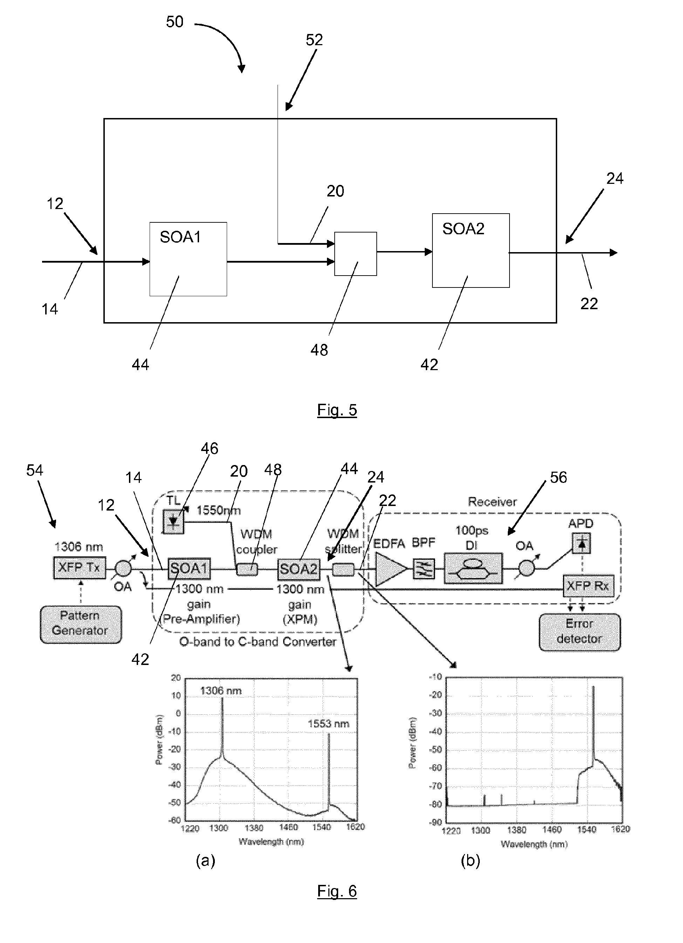

Figure 5 shows an optical communication signal converter 50 according to a fourth embodiment of the invention. The optical communication signal converter 50 of this embodiment is similar to the optical communication signal converter 40 of Figure 3, with the following modifications.

In this embodiment, the optical communication signal converter 50 comprises a second optical input 52 arranged to receive a remotely generated optical carrier signal 20.

Figure 6 shows an experimental set-up used for a proof of concept demonstration of an optical communication signal converter according to a fifth embodiment of the invention. The experimental set up is similar to Figure 3, with the following modifications. The same reference numbers are retained for corresponding features.

The experimental set up comprises transmitter apparatus 54 arranged to generate a test input optical communication signal 14 having a first wavelength of 1306nm. The transmitter apparatus 54 comprises a 10 Gigabit Small Form Factor Pluggable, XFP, transceiver, a pattern generator with a tuneable bit rate and an optical attenuator, OA The optical attenuator is used to control the optical power of the input optical communication signal to emulate access fibre losses. Input optical communication signals were generated at the following data rates: 1.244, 2.488, 4.976 and 9.952Gb/s when driven by the pattern generator producing 2³¹-1 long pseudo-random bit sequences.

The two SOAs, 42, 44, are polarization independent devices with 25dB small signal gain and 12dBm output saturation power around 1300nm. The use of polarization independent SOAs is preferable so that no constraint is imposed to the polarization of the incoming grey signal. In addition this type of SOA operates with low input optical power allowing longer distances between RE/BS sites and the optical communication signal converter.

The input optical communication signal 14 was amplified in the preamplifier SOA 42, SOA1, to amplify its optical power to above the saturation optical power of the XPM SOA 44, SOA2. The input optical communication signal was then coupled through a WDM coupler 48 with the carrier optical signal 20 generated by the tuneable laser 46 at 1550nm.

The two optical signals 14, 20 then enter the XPM SOA 44 where they undergo XPM. A WDM splitter is provided here to separate the output phase modulated optical communication signal at 1550nm from any residual input optical signal at 1306nm prior to detection. It will be appreciated that the WDM splitter is provided only for this experimental set up and is not required generally. The output phase modulated optical communication signal 22 is sent to a pre-amplified receiver 56 comprising an erbium doped fibre amplifier, EDFA, a bandpass filter, BPF, a 100ps delayed fibre interferometer, DI, a second optical attenuator, OA, and a 10 GHz avalanche photodetector, APD.

The DI in the receiver has been thermally tuned so to have the minimum of the transfer function at exactly the second wavelength. In this way at the output there is a "zero" when the input signal at 1300 nm is constant without any chirp in the XPM SOA and there is a pulse, hence a "one", corresponding to each input optical communication signal transition that give positive or negative phase variations. So the same 100ps DI can be used for phase demodulation of each of the bit rates obtaining intensity pulses whose length is related to both the XPM SOA gain recovery time and the filter slope.

Examples of signal spectra after the XPM SOA 44 and after the WDM splitter are shown in the insets (a) and (b) respectively in Figure 6. As it can be seen, a positive interesting feature of the optical signal converter is that the 1300 nm SOA adds practically no in-band ASE noise to the output phase modulated optical communication signal.

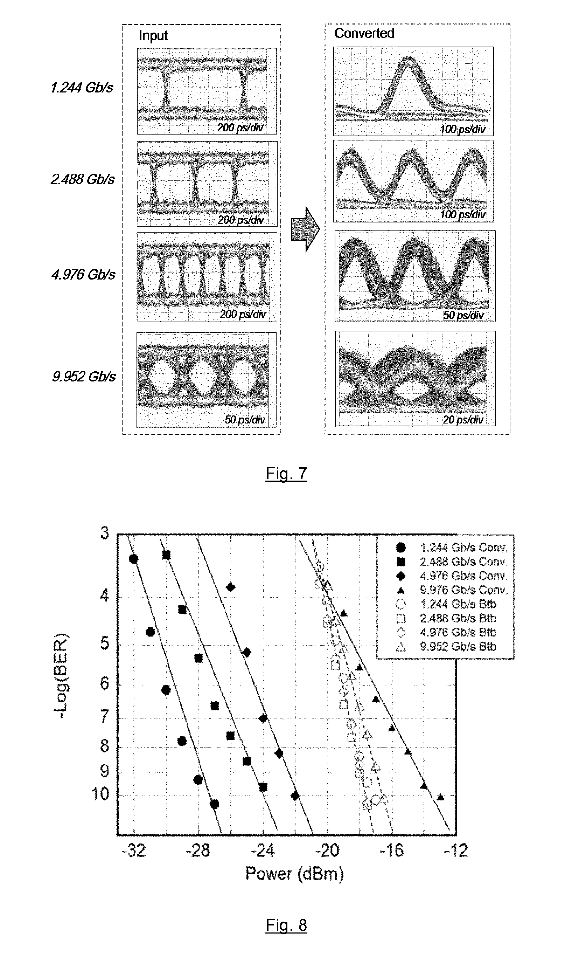

Figure 7 shows eye diagrams of the input optical communication signal (from the XFL Tx at 1306nm) and the corresponding demodulated converted output optical communications signals (at 1537nm) for bit rates of 1.244 Gb/s, 2,488 Gb/s, 4.976 Gb/s and 9.952 Gb/s. Figure 8 shows bit error rate, BER, measurements for each of the input optical communication signals and the detected output phase modulated optical communication signal of Figure 7.

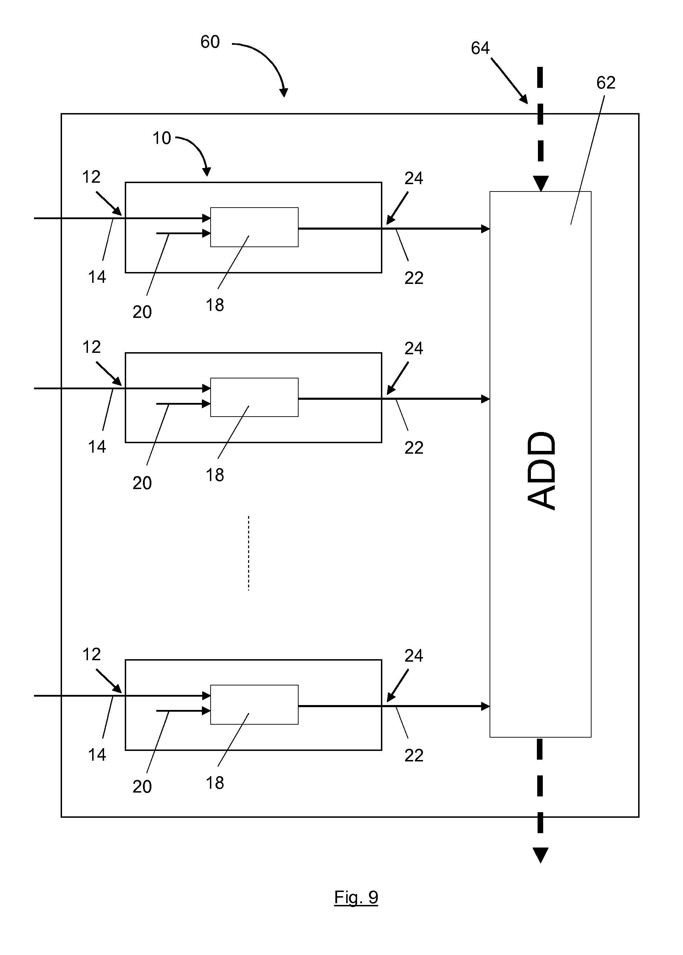

Referring to Figure 9, a sixth embodiment provides an optical communication signal aggregator 60 comprising a plurality of optical communication signal converters 10 as shown in Figure 1 and a wavelength multiplexer 62.

The optical input 12 of each optical communication signal converter 10 is arranged to receive a respective input optical communication signal 14 and each non-linear optical medium 18 is arranged to receive a respective carrier optical signal 20 at a different one of a plurality of wavelengths, each wavelength being outside the gain spectrum of the respective non-linear optical medium.

The wavelength multiplexer, WDM Mux, 62 is arranged to receive each respective output optical communication signal 22. The wavelength multiplexer has an output arranged to be connected to an optical communication network 64 and configured to add the output optical communication signals to the optical communication network.

The optical communication network 64 is configured to transmit optical signals at a plurality of wavelengths within a preselected wavelength range. Each second wavelength is one of the plurality of wavelengths and each first wavelength is outside the preselected wavelength range.

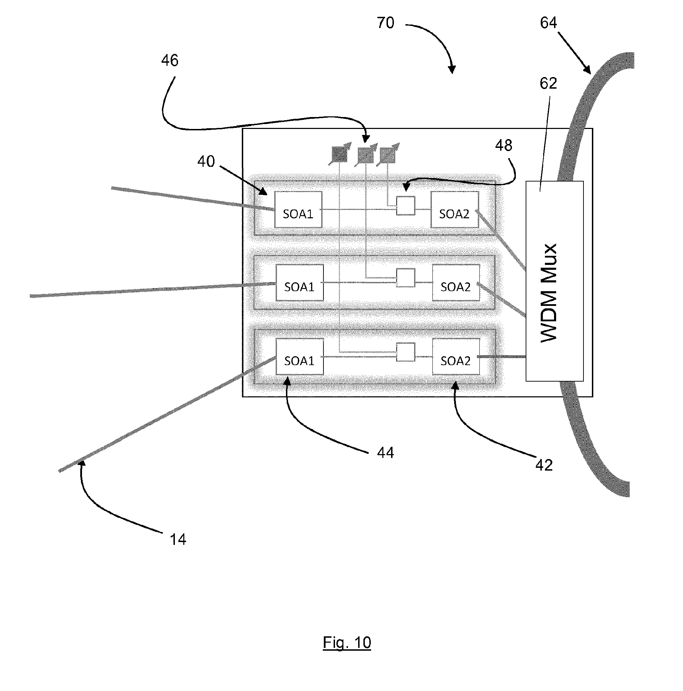

Figure 10 shows an optical communication signal aggregator 70 according to a seventh embodiment of the invention. The aggregator 70 of this embodiment is similar to the aggregator 60 shown in Figure 9, with the following modifications. The same reference numbers are retained for corresponding features.

In this embodiment, the aggregator 70 comprises a plurality of optical communication signal converters 40 as shown in Figure 3. Each optical source 46 is arranged to generate a respective carrier optical signal 20 at the respective second wavelength.

The WDM Mux 62 may be a simple combiner or an arrayed waveguide grating, AWG.

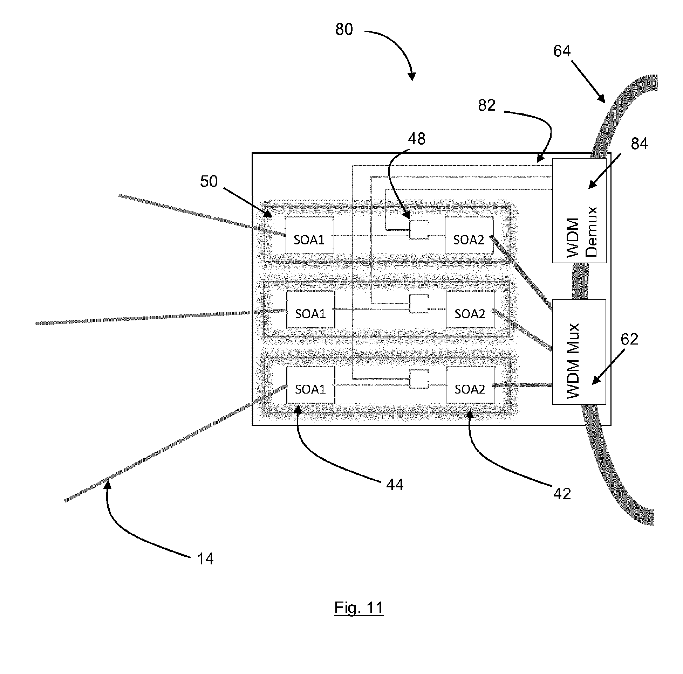

Figure 11 shows an optical communication signal aggregator 80 according to an eighth embodiment of the invention. The aggregator 80 of this embodiment is similar to the aggregator 60 shown in Figure 9, with the following modifications. The same reference numbers are retained for corresponding features.

In this embodiment, the aggregator 80 comprises a plurality of optical communication signal converters 50 as shown in Figure 5. The aggregator 80 additionally comprises a wavelength demultiplexer, WDM Demux, 84 which has an input arranged to receive carrier optical signals at the second wavelengths from the optical network 64. The wavelength demultiplexer is connected to the optical signal converters 50 and is arranged to direct a respective one of the carrier optical signals 82 to the XPM SOA 42 of each optical signal converter.

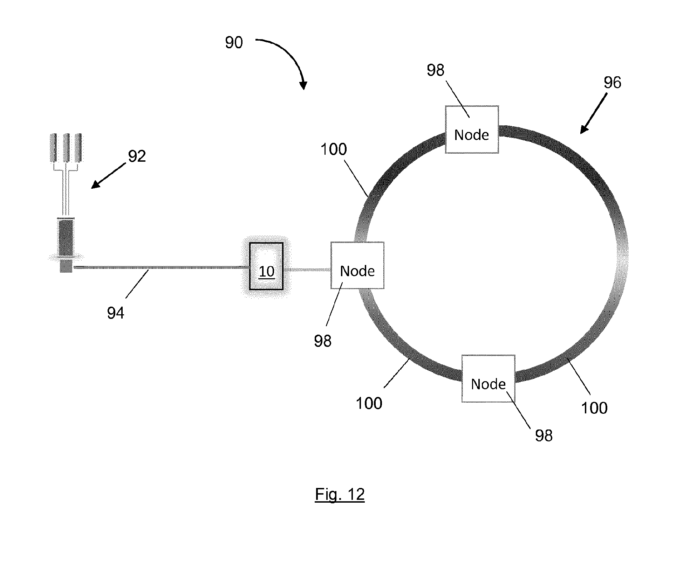

A ninth embodiment of the invention provides a communication network 90 as shown in Figure 12. The network 90 comprises an optical communication signal converter 10, radio network apparatus 92 and an optical communication network 96.

The optical communication signal converter 10 in this example is the one shown in Figure 1, but it will be appreciated that any of the optical communication signal converters 30, 40, 50 of Figures 2 to 8 may alternatively be used.

The radio network apparatus 92 is coupled to the optical communication signal converter 10 via an optical link 94. The radio network apparatus is arranged to generate and transmit an optical communication signal having a first wavelength and an optical power, and carrying communications traffic encoded as an intensity modulation. This signal is received as the input optical communication signal at the optical communication signal converter 10.

The optical communication network 96 in this example is a ring network comprising a plurality of nodes 98 and a plurality of optical links 100. It will be appreciated that other network architectures may alternatively be used.

The output of the optical communication signal converter is coupled to the optical communication network 96, to enable the output optical communication signal to be added to the optical communication network.

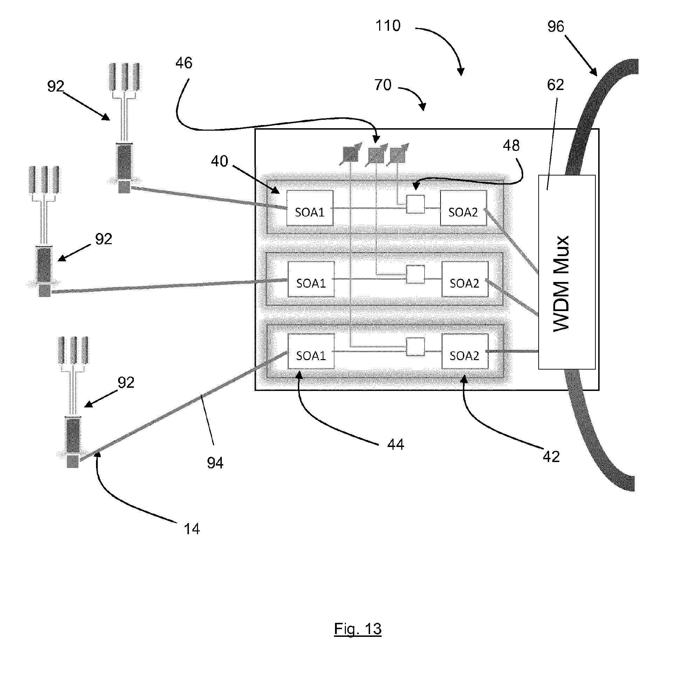

A tenth embodiment of the invention provides a communication network 110 as shown in Figure 13. The network 110 of this embodiment is similar to the network 90 shown in Figure 12, with the following modifications. The same reference numbers are retained for corresponding features.

In this embodiment, the communication network comprises a plurality of radio network apparatus 92, each coupled via a respective optical link 94 to the input 12 of a respective one of a plurality of optical communication signal converters 40. The optical communication signal converters are provided within an optical communication signal aggregator 70, as shown in Figure 10. The wavelength multiplexer 62 of the aggregator 70 is coupled to the optical communication network 96.

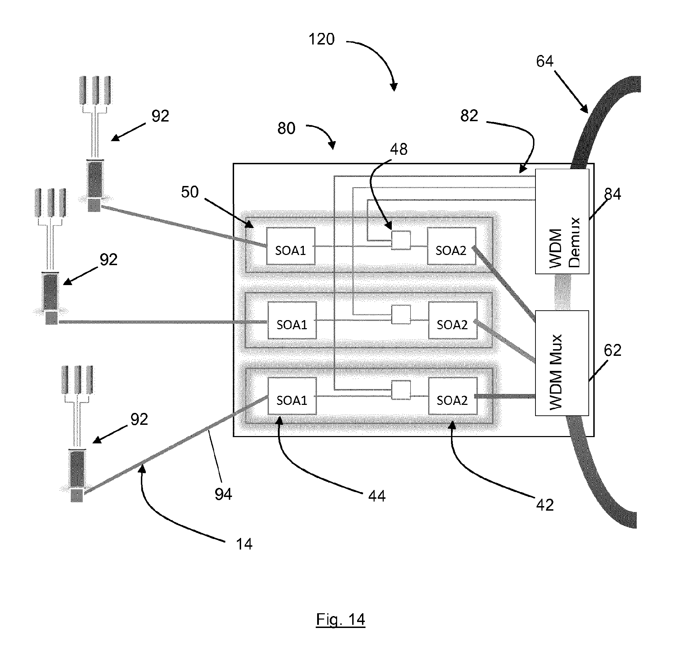

An eleventh embodiment of the invention provides a communication network 120 as shown in Figure 14. The network 120 of this embodiment is similar to the network 110 shown in Figure 13, with the following modifications. The same reference numbers are retained for corresponding features.

In this embodiment, a plurality of optical communication signal converters 50 are provided within an aggregator 80 as shown in Figure 11. The wavelength demultiplexer 84 of the aggregator 80 is coupled to the optical communication network 96.

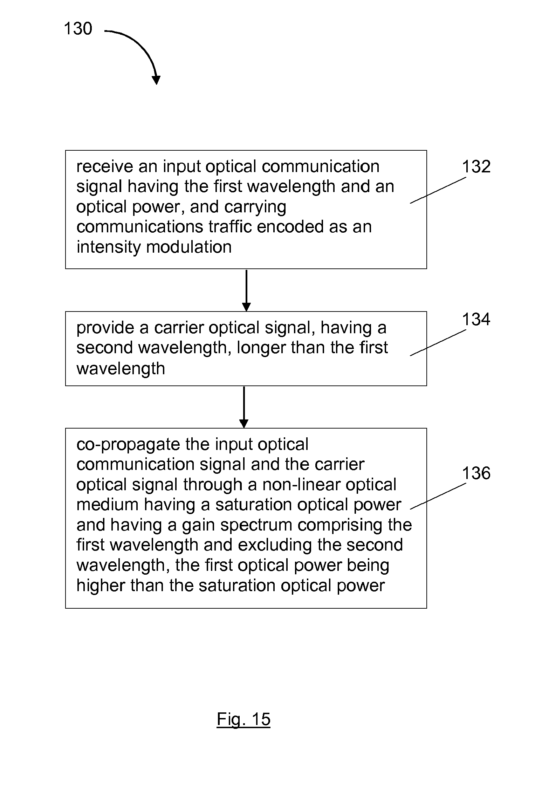

Referring to Figure 15, a twelfth embodiment of the invention provides a method 130 of wavelength and line code conversion of an optical communication signal.

The method comprises receiving an input optical communication signal having a first wavelength and a first optical power, and carrying communications traffic encoded as an intensity modulation 132.

The method comprises providing a carrier optical signal, having a second wavelength, longer than the first wavelength 134. The input optical communication signal and the carrier optical signal are co-propagated through a non-linear optical medium 136. The non-linear optical medium has a saturation optical power and has a gain spectrum comprising the first wavelength and excluding the second wavelength. The first optical of the input optical communication signal is higher than the saturation optical power. As a result, cross-phase modulation of the carrier optical signal by the input optical communication signal occurs within the non-linear optical medium, causing the intensity modulation of the input optical communication signal to be converted into a phase modulation of the carrier optical signal. An output phase modulated optical communication signal carrying the communications traffic is thereby formed.

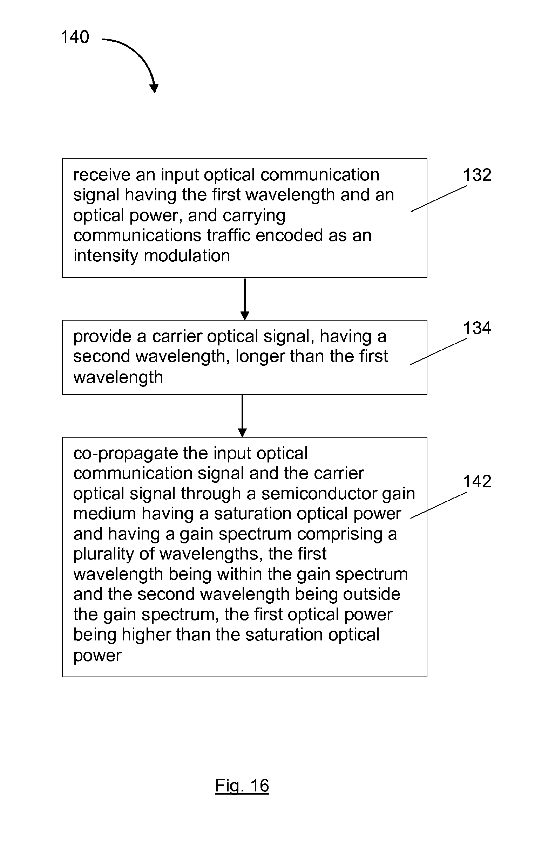

A thirteenth embodiment of the invention provides a method 140 of wavelength and line code conversion of an optical communication signal having the steps shown in Figure 16. The method 140 of this embodiment is similar to the method 130 shown in Figure 15, with the following modifications. The same reference numbers are retained for corresponding steps.

In this embodiment, the non-linear optical medium is a semiconductor gain medium having a gain spectrum comprising a plurality of wavelengths 142. The first wavelength is within the gain wavelength range and the second wavelength is outside the gain wavelength range.

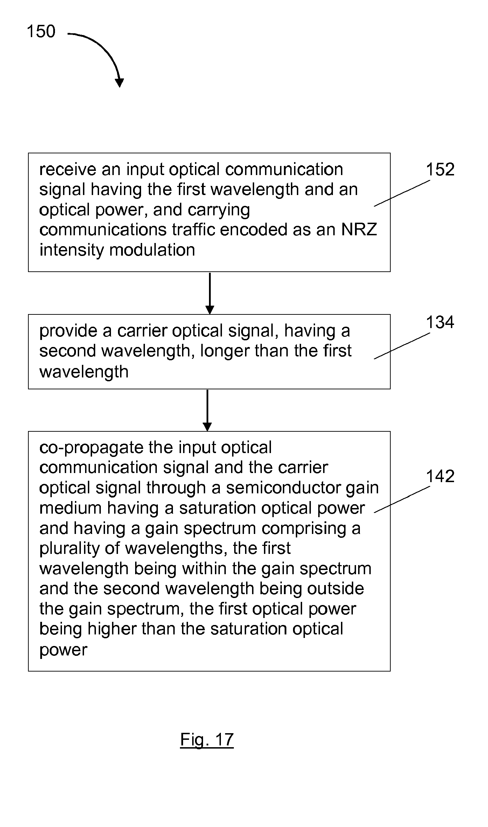

A fourteenth embodiment of the invention provides a method 150 of wavelength and line code conversion of an optical communication signal having the steps shown in Figure 17. The method 150 of this embodiment is similar to the method 140 shown in Figure 16, with the following modifications. The same reference numbers are retained for corresponding steps.

In this embodiment, the intensity modulation is a non-return-to-zero, NRZ, intensity modulation 152. The phase modulation on the output phase modulated optical communication signal is a differential phase-shift keying coded version of the NRZ intensity modulation.

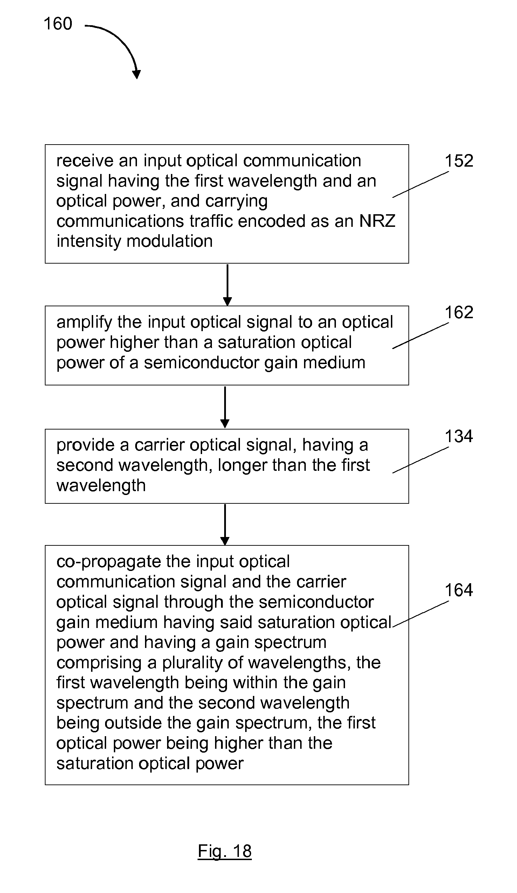

A fifteenth embodiment of the invention provides a method 160 of wavelength and line code conversion of an optical communication signal having the steps shown in Figure 18. The method 150 of this embodiment is similar to the method 150 shown in Figure 17, with the following modifications. The same reference numbers are retained for corresponding steps.

In this embodiment, the method comprises a preamplification step in which the input optical communication signal is amplified from its first optical power to a second optical power which is higher than the saturation optical power of the semiconductor gain medium 162, 164.

## Claims

1. An optical communication signal converter (10, 30, 40, 50) comprising:
an optical input (12) arranged to receive an input optical communication signal (14) having a first wavelength and a first optical power, and carrying communications traffic encoded as an intensity modulation;
a non-linear optical medium (18, 32) having a gain spectrum comprising the first wavelength and having a saturation optical power, the non-linear optical medium arranged to receive the input optical communication signal, the first optical power being higher than the saturation optical power, and arranged to receive a carrier optical signal (20) having a second wavelength, longer than the first wavelength and
outside the gain spectrum of the non-linear optical medium, wherein when the carrier optical signal and the input optical communication signal co-propagate in the non-linear optical medium cross-phase modulation of the carrier optical signal by the input optical communication signal occurs within the non-linear optical medium, causing the intensity modulation of the input optical communication signal to be converted into a phase modulation of the carrier optical signal, thereby forming an output phase modulated optical communication signal (22) carrying said communications traffic; and
an optical output (24) arranged to output the output optical communication signal.

2. An optical communication signal converter as claimed in claim 1, wherein the non-linear optical medium is a semiconductor gain medium (32) having a gain spectrum comprising a plurality of wavelengths, the first wavelength being within the gain spectrum and the second wavelength being outside the gain spectrum.

3. An optical communication signal converter as claimed in claim 1 or claim 2, wherein the intensity modulation is a non-return-to-zero intensity modulation and the phase modulation is a differential phase-shift keying coded version (34) of the intensity modulation.

4. An optical communication signal aggregator (60, 70, 80) comprising:
a plurality of optical communication signal converters (10, 30, 40, 50) as claimed in any of claims 1 to 3, each optical input arranged to receive a respective input optical communication signal and each non-linear optical medium arranged to receive a respective carrier optical signal at a different one of a plurality of wavelengths, each said wavelength being outside the respective gain spectrum; and
a wavelength multiplexer (62) arranged to receive each respective output optical communication signal and having an output arranged to be connected to an optical communication network (64) and configured to add the output optical communication signals to the optical communication network.

5. An optical communication signal aggregator as claimed in claim 4, wherein the optical communication network (64) is configured to transmit optical signals at a plurality of wavelengths within a preselected wavelength range and wherein each second wavelength is one of the plurality of wavelengths and each first wavelength is outside the preselected wavelength range.

6. An optical communication signal aggregator as claimed in claim 4 or claim 5, wherein each optical communication signal converter (40) further comprises an optical source (46) arranged to generate the respective carrier optical signal at the respective second wavelength.

7. An optical communication signal aggregator as claimed in claim 4 or claim 5, further comprising a wavelength demultiplexer (84) having an input arranged to receive carrier optical signals at the second wavelengths, and the wavelength demultiplexer being connected to the optical signal converters and arranged to direct a respective one of said carrier optical signals (82) to the respective optical amplifier.

8. A communication network (90, 110, 120) comprising:
an optical communication signal converter (10, 30, 40, 50) as claimed in any of claims 1 to 3;
radio network apparatus (92) coupled to the optical communication signal converter via an optical link (94) and the radio network apparatus arranged to generate and transmit an optical communication signal having a first wavelength and an optical power, and carrying communications traffic encoded as an intensity modulation; and
an optical communication network (96), wherein the output of the optical communication signal converter is coupled to the optical communication network, to enable the output optical communication signal to be added to the optical communication network.

9. A communication network as claimed in claim 8, wherein the optical communication signal converter is provided within an optical communication signal aggregator (60, 70, 80) as claimed in any of claims 4 to 7, and wherein the wavelength multiplexer is coupled to the optical communication network.

10. A method (130, 140, 150) of wavelength and line code conversion of an optical communication signal, the method comprising:
receiving an input optical communication signal having a first wavelength and a first optical power, and carrying communications traffic encoded as an intensity modulation (132, 152);
providing a carrier optical signal, having a second wavelength, longer than the first wavelength (134);
co-propagating the input optical communication signal and the carrier optical signal through a non-linear optical medium having a saturation optical power and having a gain spectrum comprising the first wavelength and excluding the second wavelength, the first optical power being higher than the saturation optical power (136), such that cross-phase modulation of the carrier optical signal by the input optical communication signal occurs within the non-linear optical medium, causing the intensity modulation of the input optical communication signal to be converted into a phase modulation of the carrier optical signal, thereby forming an output phase modulated optical communication signal carrying said communications traffic.

11. A method as claimed in claim 10, wherein the non-linear optical medium is a semiconductor gain medium having a gain spectrum comprising a plurality of wavelengths, the first wavelength being within the gain spectrum and the second wavelength being outside the gain spectrum (142).
A method as claimed in claim 10 or claim 11, wherein the intensity modulation is a non-return-to-zero intensity modulation (152) and the phase modulation is a differential phase-shift keying coded version of the intensity modulation.
